# EUROPÄISCHE PATENTANMELDUNG

(11) **EP 0 743 102 A1**
(43) Veröffentlichungstag der Anmeldung: **20.11.1996**
(21) Anmeldenummer: 96107536.3
(22) Anmeldetag: 11.05.1996
(51) Int. Cl.: B05D 1/00

(54) **Verwendungen von Polyfluorfulleren zur Beschichtung von Werkstoffoberflächen**

(30) Priorität: 19.05.1995 DE 19518005
(71) Anmelder: Bradic, Marijan, 43260 Krizevci (HR)
(72) Erfinder: Bradic, Marijan, 43260 Krizevci (HR)
(74) Vertreter: Bartels, Martin Erich Arthur

(57) **Zusammenfassung**

Die Erfindung betrifft Verwendungen von Polyfluorfulleren zur Beschichtung von Oberflächen, insbesondere Werkstoffoberflächen sowie die Werkstoffoberfläche selbst, die mit einer Polyfluorfulleren zumindest enthaltenden Beschichtung versehen ist. Die Werkstoffoberfläche kann auch die Oberfläche granulierter oder pulverförmiger Werkstoffe sein. Der Werkstoff kann ein Polymer sein.

Dabei wird eine Fullerenlösung in einem apolaren Lösungsmittel mit einer Poltetrafluorethylendispersion vermischt und die Reaktionsmischung während der Vermischungszeit mit Fluoreszenzlicht bestrahlt.

Die Beschichtung kann dadurch erzeugt werden, daß das Polyfluorfulleren bei in etwa 350°C auf die Oberfläche sublimiert oder bei in etwa 400°C, vorzugsweise über 400°C, auf der Oberfläche gesintert wird.

Polyfluorfulleren kann auch als Additiv einer Beschichtung von Oberflächen verwendet werden.

## Beschreibung

Die Erfindung betrifft Verwendungen von Polyfluorfulleren.

Diese Anmeldung ist eine Nachanmeldung zu der deutschen Patentanmeldung Aktenzeichen Nr. 195 18 005.4, deren Offenbarungsgehalt hier ausdrücklich und vollständig einbezogen wird.

Polyfluorfullerene leiten sich von den Fullerenen ab.
Diese neue Stoffklasse der Fullerene C₆₀, C₇₀ wurde erstmals 1985 durch massenspektroskopische Untersuchungen als existent nachgewiesen (A. Hirsch, Angew. Chem. 1993, 105, 1189) und erste makroskopische Mengen konnten 1990 hergestellt werden (N.Matsuzawa, D.A. Dixon, T. Fukunaga,, J.Phys. Chem 1992, 96, 7594).

Polyfluorfullerene wurden bisher durch Behandlung einer Lösung von Fulleren in Dichlormethan mit XeF₂ oder Einwirkung von F₂-Gas unter geringem Druck auf festes Fulleren erhalten (M. Saunders, H.A. Jimenez-Vazquez, R. James Cross, S. Mroczkowski, M. L. Gross, D.E. Gibin, R. J. Poreda, J. Am. Chem. Soc. 1994, 116, 2193).
Es wurden dabei Polyfluorfullerene mit unterschiedlichem Fluorierungsgrad erhalten. Sie haben die allgemeine Summenformel Cₘ F₂ₙ, wobei m, n natürliche Zahlen, m = 60 oder 70 und n = 15 - 35 darstellt. n kann auch unterhalb sowie oberhalb des angegebenen Bereichs variieren. So wurde bereits ein hyperfluoriertes Fulleren mit n = 51 und der allgemeinen Summenformel C₆₀ F₁₀₂ massenspektroskopisch nachgewiesen. Auch Fullerene mit m > 70 und die entsprechenden fluorierten Verbindungen sind möglich.

In Fullerene Sci. Technol. (1993), 1 (4), 499-535 werden umfangreiche Untersuchungsergebnisse offenbart, die die Herstellung von Polyfluorfulleren durch Einwirkung von F₂-Gas auf festes Fulleren betreffen, wobei Reaktionszeiten, Temperatur und der F₂ -Druck variiert wurden. Außerdem diente sowohl reines C₆₀-Fulleren als auch ein Gemisch aus C₆₀/C₇₀-Fulleren als Ausgangsverbindung.

Als Verwendung der neuen Substanzklasse der Polyfluorfullerene ist in den Derwent Abstr. Nr. 94-071 652/09 zu JP 060 24720-A offenbart, daß durch Einwirkung von F₂-Gas auf Fulleren in Gegenwart von Fluorwasserstoff hergestelltes Polyfluorfulleren als Schmiermittel oder als Additiv für Schmiermittel geeignet ist.

Weitere Verwendungen der Polyfluorfullerene sind bisher nicht bekannt.

Der Erfindung liegt die Aufgabe zugrunde, eine weitere Verwendung der Polyfluorfullerene anzugeben.

Die Aufgabe wird dadurch gelöst, daß die Verwendung von Polyfluorfulleren zur Beschichtung von Oberflächen, insbesondere Werkstoffoberflächen, angegeben wird.

Durch die erfindungsgemäße Verwendung von Polyfluorfulleren steht eine temperaturbeständige und chemisch neutrale Verbindung zur Verfügung, die antiadhäsive Eigenschaften aufweist, welche in etwa mit Teflon vergleichbar sind.

Fullerene sind sublimierbar. Das gilt auch für Polyfluorfulleren. Daher kann Polyfluorfulleren bei in etwa 350°C auf die zu beschichtende Oberfläche sublimiert werden. Dabei kann es vorteilhaft sein, daß die Temperatur der Reaktionsmischung nach der Vermischungszeit vorzugsweise auf über 100°C, jedoch unterhalb der Zerfallstemperatur des Polytetrafluorethylens gehalten wird, um so das Lösungsmittel vor der Sublimation zu entfernen.

In einer bevorzugten Ausführungsform wird die Beschichtung daher dadurch erhalten, daß eine Fullerenlösung in einem apolaren Lösungsmittel mit einer Polytetrafluorethylendispersion vermischt wird, die Reaktionsmischung während der Vermischungszeit mit Fluoreszenzlicht einer Wellenlänge im Bereich von in etwa 380 bis 780 nm bestrahlt wird und das Polyfluorfulleren bei in etwa 350° auf die Oberfläche sublimiert wird.

In einer weiteren bevorzugten Ausführungsform wird die Beschichtung dadurch erhalten, daß eine Fullerenlösung in einem apolaren Lösungsmittel mit einer Polytetrafluorethylendispersion vermischt wird, die Reaktionsmischung während der Vermischungszeit mit Fluoreszenzlicht einer Wellenlänge im Bereich von in etwa 380 bis 780 nm bestrahlt wird und die so erhaltene Reaktionsmischung auf die zu beschichtende Oberfläche aufgetragen, bei erhöhter Temperatur getrocknet und der so entstandene Film bei in etwa 400°C, vorzugsweise über 400°C auf der Oberfläche gesintert wird.

Als Aktivierungsenergie wird Fluoreszenzlicht eingesetzt, da Fulleren photoempfindlich ist und im sichtbaren Bereich des Spektrums von in etwa 200 bis 600 nm absorbiert. Als apolares Lösungsmittel wird vorzugsweise Benzol oder Toluol verwendet. Dem Fachmann sind darüberhinaus weitere Lösungsmittel bekannt, die auch verwendet werden können, wie beispielsweise Hexan. Auch Gemische aus zumindest jeweils zwei geeigneten Lösungsmitteln können verwendet werden. Die Vermischungszeit der Fullerenlösung mit der Polytetrafluorethylendispersion beträgt zumindest in etwa 10 Minuten.

Polyfluorfulleren kann auch als Additiv einer Beschichtung verwendet werden, insbesondere als Additiv in Polymeren, wobei dann die Oberfläche insbesondere die Werkstoffoberfläche mit einem Polymer beschichtet wird, das Polyfluorfulleren als Additiv aufweist. Als Polymer kann das bisher schon zur Oberflächenbeschichtung eingesetzte Polytetrafluorethylen verwendet werden. Bei der Verwendung von Polytetrafluorethylen ist vorteilhaft, daß man nicht zunächst Polyfluorfulleren herstellen muß, weil dieses in situ entsteht, wenn auf der zu beschichtenden Oberfläche zunächst eine Fullerenlösung aufgetragen, diese bei geeigneter Temperatur unter Erzeugung eines Fullerenfilms getrocknet und anschließend ein Polytetrafluorethylenfilm angelegt wird. Durch Sintern bei einer Temperatur von in etwa 400°C, vorzugsweise über 400°C, entsteht dann die Polyfluorfulleren als Additiv enthaltende Oberflächenbeschichtung. Diese dient als Korrosionsschutz, verbesserter Schutz vor mechanischer Abnutzung und/oder als Antihaftfilm. Es konnte festgestellt werden, daß das durch Sintern zusammen mit Polytetrafluorethylen hergestellte Polyfluorfulleren stärker kristallisiert ist, als Polyfluorfulleren, das in der flüssigen Reaktionsmischung durch Fluorieren mit Polytetrafluorethylen erzeugt worden ist.

Grundsätzlich zeigt das auf einer Oberfläche gesinterte Polyfluorfulleren eine höhere Kristallinität als das aus der flüssigen Reaktionsmischung gewonnene Produkt. Wenn auf diese Weise eine Werkstoffoberflächen-Beschichtung mit Polytetrafluorethylen durchgeführt wird, welches Polyfluorfulleren als Additiv enthält und insbesondere, wenn hierdurch die Eigenschaften des Polytetrafluorethylens gegen Abnutzung verbessert werden sollen, kann Polyfluorfulleren in einer Menge von in etwa 6 Gew%, bezogen auf das Gesamtgewicht an Polytetrafluorethylen, zugegeben werden. Eine größere Menge an zugegebenem Polyfluorfulleren wirkt sich nachteilig auf die Teflonstruktur aus.

Die Zeitspanne für das Sintern bei einer Temperatur von vorzugsweise über 400°C, bei dem das Fulleren in die Polytetrafluorethylenschicht diffundiert, kann variieren und ist im wesentlichen abhängig vom Qualitätsbedarf der fertigen Polytetrafluorethylenschicht mit Additiv. Es wurde festgestellt, daß das auf der Oberfläche als Film aufgetragene Fulleren nicht quantitativ in das Polytetrafluorethylen hineindiffundiert. Ein gewisser Fullerenanteil sublimiert. Trägt man zunächst auf die Oberfläche eine Fullerenschicht auf, die einer Zugabe von in etwa 6 Gew% Fulleren entsprechen würde, so resultiert dies in einem Polyfluorfullerenanteil der fertigen Beschichtung von in etwa 2 Gew%.

In einer weiteren erfindungsgemäßen Verwendung kann Polyfluorfulleren zur Beschichtung von granulierten oder pulverförmigen Werkstoffen und/oder Polymeren, vorzugsweise Polyethylen, besonders bevorzugt Polyethylen hoher Dichte eingesetzt werden. Das Polyethylengranulat weist dabei im Durchschnitt eine Teilchengröße von in etwa 800 - 1000µm auf. Das Polyfluorfulleren kann dabei durch Sublimation als Mikrokristallschicht auf dem Polyethylengranulat aufgebracht werden. In dem eingesetzten Werkstoff und/oder Polymer können weitere Zusatzstoffe, insbesondere ein Stabilisator und organisches Peroxid enthalten sein.

Wenn die genannten Zusatzstoffe, insbesondere der Stabilisator, enthalten sind, kann in einer besonders bevorzugten Ausführungsform der Erfindung ein Polymergranulat, insbesondere Polyethylengranulat (Staub-Polyethylen) mit Polyfluorfulleren beschichtet werden.
Bei dieser erfindungsgemäßen Verwendung wird Polyfluorfulleren pulverförmig oder gasförmig zu der Mischung aus granuliertem Polyethylen, vorzugsweise Polyethylen hoher Dichte, Stabilisator und organischem Peroxid hinzugegeben. Die Komponenten werden bei einer Temperatur von zumindest in etwa 50 bis 60°C vermischt. Es wurde festgestellt, daß das Polyfluorfulleren in dem Stabilisator gelöst und so in überraschender Weise gut homogenisiert auf der Oberfläche des granulierten Polyethylens verteilt wird.

Der Mischung aus Polyethylen hoher Dichte, Stabilisator und Peroxid werden vorzugsweise in etwa 2 Gew% Polyfluorfulleren, bezogen auf das Gesamtgewicht an Polyethylen, zugesetzt.

Die Erfindung betrifft des weiteren Oberflächen, insbesondere Werkstoffoberflächen, die eine Beschichtung bestehend aus Polyfluorfulleren aufweisen oder eine Beschichtung, in der zumindest Polyfluorfulleren als Additiv enthalten ist.

Dabei handelt es sich vorzugsweise um die Oberfläche granulierter oder pulverförmiger Werkstoffe, besonders bevorzugt von polymeren Wirkstoffen.

Im folgenden soll die Erfindung anhand experimenteller Ergebnisse näher erläutert werden.

### I. Herstellung des Polyfluorfullerens

### 1. Versuch

1. In 5ml Benzol wurden 40mg Fulleren gelöst und 2g dispergiertes Polytetrafluorethylen hinzugegeben. Das hierfür verwendete Fulleren wurde im Institut "Ruder Boskovic", Zagreb, erzeugt oder von Hoechst bezogen. Der Reinheitsgrad des von Hoechst bezogenen Fullerens betrug nach Herstellerangaben 99,9%. Dabei kann das verwendete Fulleren aus C₆₀, C_{>60}, C₇₀ und C_{>70}, sowie Mischungen dieser Fullerene bestehen. Die Temperatur wird auf zwischen 30 und 40°C eingestellt und beide Komponenten werden mittels Ultraschall und unter Rühren über einen Zeitraum von 10 Min. miteinander vermischt. Zusätzlich wird während des Rührens Aktivierungsenergie in Form von Fluoreszenzlicht zugeführt. Dabei liegt die emittierte Strahlung im sichtbaren oder nahe dem sichtbaren Bereich des Spektrums, in etwa im Bereich von 380 bis 780 nm. Das für diese Fluorierungsreaktion verwendete Reaktionsgefäß besteht aus Polytetrafluorethylen.
   Bei dem Vermischungsvorgang entsteht aus der weißen Dispersion des Polytetrafluorethylens und der violetten Lösung des Fullerens eine Reaktionsmischung hell- bis dunkelgelber Farbe.

### 2. Versuch: Variation der Vermischungszeit

Es wurde verfahren wie unter I.1. beschrieben, jedoch die Vermischungszeit variiert. Diese wurde schrittweise erhöht, bis eine Vermischungszeit von 3 Tagen erreicht war.
Es wurden gegenüber der Vermischungszeit von 10 Min. keine feststellbaren Änderungen des Reaktionsergebnisses erzielt, insbesondere die Ausbeute blieb im wesentlichen konstant.

### 3. Versuch: Variation der Fullerenkonzentration

Es wurde verfahren wie unter I.1. beschrieben, jedoch die Fullerenkonzentration variiert. Dabei wurde festgestellt, daß bis zu 2 g Fulleren in 5 ml Benzol gelöst werden konnten. Die Menge an dispergiertem Polytetrafluorethylen wurde konstant gehalten. Die beste Umsetzung wurde erzielt, wenn 600 mg Fulleren verwendet wurden, bei gleichbleibendem Lösungsmittelvolumen von 5 ml und dispergiertem Polytetrafluorethylen von 2 g.

### 4. Versuch: Variation der Temperatur

Es wurde zunächst so verfahren, wie unter I.1. beschrieben. Um jedoch eine größere Sättigung zu erzielen, wurde die Reaktionsmischung anschließend über einen Zeitraum von bis zu 5 Tagen auf in etwa 100°C erwärmt. Unter größerer Sättigung wird dabei zum einen eine höhere Ausbeute verstanden und zum anderen ein höherer Fluorierungsgrad in Richtung n = 30 der allgemeinen Summenformel, welches dem perfluorierten Fulleren entsprechen würde.
Es wurden gegenüber der Reaktion, wie unter I.1. beschrieben, keine feststellbaren Änderungen des Reaktionsergebnisses erzielt, insbesondere die Ausbeute blieb im wesentlichen konstant. Vorteilhaft ist diese Temperaturerhöhung jedoch in Hinblick auf die Isolierung des Polyfluorfullerens durch Sublimation - wie weiter unten (II.1.) beschrieben - da bei Verwendung von Benzol als Lösungsmittel dieses bei der genannten Temperatur bereits abgedampft ist und die Sublimation direkt durchgeführt werden kann.

### 5. Versuch: Variation des Lösungsmittels

Es wurde verfahren wie unter I.1. bis I.4. beschrieben, jedoch statt Benzol Toluol verwendet. Es wurden gegenüber Benzol keine feststellbaren Änderungen des Reaktionsverhaltens und -ergebnisses erzielt.
Generell eignen sich apolare Lösungsmittel sehr gut. Je polarer ein Lösungsmittel ist, desto weniger geeignet ist es, als Lösungsmittel im Rahmen der vorliegenden Erfindung eingesetzt zu werden. Demgemäß können Lösungsmittel wie THF und Aceton noch Verwendung finden, während beispielsweise Wasser als Lösungsmittel ungeeignet ist.

### 6. Versuch:

Es wurde verfahren, wie unter I.1. beschrieben, jedoch statt der Fullerenlösung pulverförmiges Fulleren eingesetzt. Die Temperatur wurde auf in etwa 400°C erhöht. Es konnte keine Umsetzung zu Polyfluorfulleren beobachtet werden.

### II. Isolierung des Polyfluorfullerens

### 1. Durch Sublimation

Die Temperatur der Reaktionsmischung wird nach durchgeführter Vermischung so weit erhöht, daß das Lösungsmittel abdampfen kann, jedoch wird die Temperatur unterhalb der Zerfallstemperatur des Polytetrafluorethylens gehalten. In der Regel wurde eine Temperatur von etwas über 100°C gewählt.
Anschließend wird die Temperatur auf in etwa 350°C erhöht, und Polyfluorfulleren unter Schutzgasatmosphäre sublimiert.
Die Sublimation kann auch im Vakuum durchgeführt werden. Sowohl die Sublimation unter Schutzgasatmosphäre als auch im Vakuum sind geeignet, das Entstehen von Nebenprodukten, wie Oxy-Verbindungen von Polyfluorfulleren durch zumindest teilweise Reaktion mit Sauerstoff, im wesentlichen zu verhindern.

### 2. Durch Extraktion

Polyfluorfulleren kann mittels Extraktion aus der Reaktionsmischung entfernt werden. Als Extraktionsmittel dient Benzol oder Toluol, da das in der Reaktionsmischung noch enthaltene Polytetrafluorethylen, das nicht mit der Fullerenlösung reagiert hat, in Benzol unlöslich ist, während sich Polyfluorfulleren in Benzol löst. Auch weitere apolare Lösungsmittel, wie beispielsweise Hexan oder Gemische aus zumindest jeweils zwei geeigneten apolaren Lösungsmitteln können verwendet werden.
Falls erforderlich, kann das Polyfluorfulleren anschließend aus dem Extrakt sublimiert werden, wie unter II.1. beschrieben.
Das Reaktionsprodukt wurde mittels Massenspektrometrie untersucht. Dabei wurde festgestellt, daß sich Polyfluorfullerene der allgemeinen Summenformel Cₘ F₂ₙ gebildet haben, wobei m = 60, 70 und n = 20-35 ist.

### III. Beschichtung von Werkstoffoberflächen durch Sintern:

die nach Versuch I.1. erhaltende Reaktionsmischung wird auf die Oberfläche eines Werkstoffs aufgetragen und das Lösungsmittel durch Trocknen bei erhöhter Temperatur entfernt. Der dadurch auf der Werkstoffoberfläche erzeugte Film wird bei über 400°C auf der Werkstoffoberfläche gesintert. Die so als Korrosionsschutz, Schutz vor mechanischer Abnutzung und/oder als Antihaftfilm erzeugte Werkstoffbeschichtung zeigt eine hellgelbe Farbe. Die Beschichtung fühlt sich fettiger an, als dies bei den Schmiermitteln Graphit und Molybdän der Fall ist.

### IV. Zur Beschichtung von Kunststoffen, insbesondere Polyethylen durch Sublimation:

die nach Versuch I.1. erhaltene Reaktionsmischung wird bei in etwa 350°C unter Schutzgasatmosphäre sublimiert. Dabei trifft das Sublimat auf eine gekühlte Oberfläche, bestehend aus Polyethylen hoher Dichte, das einen Stabilisator (Antioxidans) und ein Vernetzungsmittel (organisches Peroxid) enthielt und bildet eine mikrokristalline Schicht in Form eines Films auf dem Polyethylen hoher Dichte. Das eingesetzte Polyethylen ist ursprünglich weiß. Nach der Sublimation des Polyfluorfullerens ist es gelb gefärbt.

### V. Zur Beschichtung von Polyethylengranulat:

In der Technik wird vielfältig granuliertes Polyethylen hoher Dichte (sogenanntes Staub-Polyethylen) verwendet, das im Durchschnitt auf einen Teilchendurchmesser von in etwa 800 bis 1000 µm granuliert ist.
V.1 In einem ersten Versuch wurde das erfindungsgemäße Fluorfulleren auf das granulierte Polyethylen sublimiert, wie dies unter II. beschrieben worden ist. Es wird eine mikrokristalline homogene Beschichtung erzielt.
V.2 Polyethylen, das für Vernetzungsverfahren eingesetzt wird, enthält regelmäßig einen Stabilisator und das als Radikalbildner wirkende organische Peroxid.
   Weitere ergänzende Versuche haben nun gezeigt, daß sich das Polyfluorfulleren in dem Stabilisator, der dem Polyethylen hoher Dichte für die Anwendung in Vernetzungsverfahren regelmäßig zugegeben wird, bei einer Temperatur von in etwa 60°C löst.
Im Stabilisator Irganox von CIBA GEIGY löste sich Polyfluorfulleren bei einer Temperatur von in etwa 210°C, während es in dem ebenfalls im Polyethylen enthaltenen organischen Peroxid nicht gelöst wurde.

Bei der Beschichtung des Polyethylengranulats wurde wie folgt verfahren: In einen üblicherweise verwendeten bekannten Mixer wird zunächst das granulierte Polyethylen, dann der Stabilisator eingebracht und beides durch Drehen des Mixers mit in etwa 100-200 Drehungen/min bei einer Temperatur von in etwa 60°C miteinander vermischt. Während des ununterbrochenen Drehens wird mittels einer Dosierpumpe organisches Peroxid zugegeben. Im Mixer wird unter Schutzgasatmosphäre gearbeitet. Als Schutzgas wird vorzugsweise Stickstoff verwendet. Nach gründlicher Durchmischung wird unter Druck gasförmiges Polyfluorfulleren hinzugefügt, wobei der Druck außerhalb des Mixers gerade so gewählt wird, daß gasförmiges Polyfluorfulleren vorliegt. Innerhalb des Mixers wird wegen des Peroxids mit einem Vordruck von in etwa 1 bar gearbeitet. Das Mischen kann 1-2 Stunden dauern und ist abhängig von den Eigenschaften des jeweils eingesetzten Mixers.

Durch das oben erwähnte Löslichkeitsverhalten des Polyfluorfullerens in dem Stabilisator ist es aber auch möglich, festes Polyfluorfulleren in Pulverform einzusetzen. Dies kann beispielsweise gewonnen worden sein, wie weiter oben unter II. beschrieben. Das pulverförmige Polyfluorfulleren wird dabei den Mixern zugegeben, in denen sich das granulierte Polyethylen, der Stabilisator und das organische Peroxid befinden. Die Temperatur im Mixer wird auf in etwa 60°C gehalten und der Mixerinhalt innig durchmischt. Dadurch wird das Polyfluorfulleren in dem Stabilisator gelöst und eine homogene Verteilung des Polyfluorfullerens auf der Oberfläche des granulierten Polyethylens bewirkt. Welches Beschichtungsverfahren gewählt wird, hängt letztendlich von der gewünschten Anwendung des beschichteten Polyethylengranulats und der dafür erforderlichen Mischungsqualität ab.

### VI. Zur in situ-Herstellung von Oberflächenbeschichtungen aus Polytetrafluorethylen, die Polyfluorfulleren als Additiv enthalten.

Auf die zu beschichtende Oberfläche wird in Benzol oder Toluol gelöstes Fulleren aufgetragen. Die Konzentration des Fullerens wird so gewählt, daß sie in etwa 6 Gew%, bezogen auf das Gesamtgewicht der fertigen Beschichtung, beträgt. Dann wird die Oberfläche unter Ausbildung eines Fullerenfilms getrocknet und darüber ein Film, bestehend aus Polytetrafluorethylen, aufgetragen und durch Sintern bei einer Temperatur von über 400°C die fertige Beschichtung erhalten. Das Zeitintervall für das Sintern kann variiert werden und hängt im wesentlichen vom Qualitätsbedarf ab, der an die fertige Beschichtung gestellt wird. Bei den durchgeführten Versuchen hat man festgestellt, daß während des Sinterns Fulleren in das Polytetrafluorethylen diffundiert und dabei in situ Polyfluorfulleren im Polytetrafluorethylen entsteht. Da ein gewisser Anteil des so entstandenen Polyfluorfullerens während des Sinterns aus der Beschichtung sublimiert, wird bei Verwendung von 6 Gew% Fulleren ein Polyfluorfullerenanteil in der fertigen Beschichtung von 2 Gew% erreicht. Es wurde festgestellt, daß dann, wenn die Oberflächenbeschichtung mit dem Ziel durchgeführt wird, die Polytetrafluorethyleneigenschaften hinsichtlich mechanischer Abriebfestigkeit zu verbessern, der Anteil an Polyfluorfulleren in der fertigen Beschichtung 6 Gew% nicht überschreiten sollte, da ein größerer Anteil die Struktur des Polytetrafluorethylens nachteilig verändert.

## Patentansprüche

1. Verwendung von Polyfluorfulleren zur Beschichtung von Oberflächen, insbesondere Werkstoffoberflächen.

2. Verwendung nach Anspruch 1, wobei eine Fullerenlösung in einem apolaren Lösungsmittel mit einer Polytetrafluorethylendispersion vermischt und die Reaktionsmischung während der Vermischungszeit mit Fluoreszenzlicht bestrahlt wird.

3. Verwendung nach Anspruch 2, wobei als apolares Lösungsmittel Benzol oder Toluol verwendet wird.

4. Verwendung nach einem der Ansprüche 3 bis 5, wobei die Vermischungszeit zumindest in etwa 10 Minuten beträgt.

5. Verwendung nach einem der Ansprüche 1 bis 4, wobei die Beschichtung dadurch erzeugt wird, daß das Polyfluorfulleren bei in etwa 350°C auf die Oberfläche sublimiert wird.

6. Verwendung nach einem der Ansprüche 1 bis 4, wobei die Beschichtung dadurch erzeugt wird, daß die Reaktionsmischung auf die Oberfläche aufgetragen, bei erhöhter Temperatur getrocknet und der so entstandene Film bei in etwa 400°C, vorzugweise über 400°C, auf der Oberfläche gesintert wird.

7. Verwendung nach einem der Ansprüche 1 bis 6 als Additiv einer Beschichtung.

8. Verwendung nach Anspruch 7, bei der die Oberfläche, insbesondere Werkstoffoberfläche, mit einem Polymer beschichtet ist, das Polyfluorfulleren als Additiv aufweist.

9. Verwendung nach Anspruch 8, wobei das Polymer Polytetrafluorethylen ist.

10. Verwendung nach Anspruch 9, wobei auf die Oberfläche zunächst eine Fullerenlösung aufgetragen, diese bei geeigneter Temperatur unter Erzeugung eines Fullerenfilms getrocknet, anschließend ein Polytetrafluorethylenfilm angelegt und durch Sintern bei einer Temperatur von in etwa 400°C., vorzugsweise über 400°C, in situ eine Polyfluorfulleren enthaltende Polytetrafluorethylen-Beschichtung erzeugt wird.

11. Verwendung nach Anspruch 10, wobei in der Beschichtung in etwa 2 - 6 Gew%, vorzugsweise 2 Gew% Polyfluorfulleren, bezogen auf das Gesamtgewicht an Polytetrafluorethylen, enthalten sind.

12. Verwendung nach Anspruch 1, wobei der Werkstoff ein polymerer Werkstoff ist.

13. Verwendung nach Anspruch 12, wobei der polymere Werkstoff in Pulver- oder Granulatform vorliegt.

14. Verwendung nach Anspruch 12 oder 13, wobei der Werkstoff Zusatzstoffe, insbesondere einen Stabilisator und organisches Peroxid enthält.

15. Verwendung nach Anspruch 14, wobei granuliertes oder pulverförmiges Polyethylen, ein Stabilisator, organisches Peroxid und Polyfluorfulleren bei einer Temperatur von zumindest in etwa 50-60°C miteinander vermischt werden.

16. Verwendung nach Anspruch 15, wobei in etwa 2 Gew% Polyfluorfulleren, bezogen auf das Gesamtgewicht an Polyethylen, zugesetzt werden.

17. Oberfläche, insbesondere Werkstoffoberfläche, mit einer Beschichtung bestehend aus Polyfluorfulleren oder zumindest Polyfluorfulleren enthaltend.

18. Granulierte oder pulverförmige Werkstoffe mit einer Beschichtung bestehend aus Polyfluorfulleren oder zumindest Polyfluorfulleren enthaltend.

19. Werkstoff nach Anspruch 18, der ein polymerer Werkstoff ist.
